# EUROPEAN PATENT SPECIFICATION

(11) **EP 2 542 922 B1**
(45) Date of publication and mention of the grant of the patent: **29.04.2020**
(21) Application number: 11711050.2
(22) Date of filing: 28.02.2011
(51) Int. Cl.: G01V 3/12, G01V 3/08

(54) **STRUCTURE FOR MAGNETIC FIELD SENSOR FOR MARINE GEOPHYSICAL SENSOR STREAMER**
STRUKTUR FÜR EINEN MAGNETFELDSENSOR FÜR EINEN GEOPHYSISCHEN MEERESSENSOR-STREAMER
STRUCTURE POUR CAPTEUR DE CHAMP MAGNÉTIQUE POUR FLÛTE DE CAPTEUR GÉOPHYSIQUE MARIN

(30) Priority: 01.03.2010 US 660538
(43) Date of publication of application: 09.01.2013
(73) Proprietor: PGS Geophysical AS, 0216 Oslo (NO)
(72) Inventor: SUDOW, Gustav Goran Mattias, 169 39 Solna (SE); LINQVIST, Ulf Peter, S-141 72 Segeltorp (SE); JUHASZ, Andras Robert, 118 57 Stockholm (SE)
(74) Representative: Gill Jennings & Every LLP
(86) International application number: PCT/EP2011/052947
(87) International publication number: WO 2011/107438

(56) References cited:
- EP-A2- 0 330 784
- WO-A1-2009/075961
- US-A1- 2009 295 394
- US-A1- 2010 017 133
- US-B1- 7 446 535

## Description

### Cross-reference to related applications

Not applicable.

### Statement regarding federally sponsored research or development

Not applicable.

### Background of the Invention

### Field of the Invention

The invention is related to systems and methods for estimating the response of rock formations in the earth's subsurface to imparted electromagnetic fields in order to determine spatial distribution of electrical properties of the rock formations. More particularly, the invention is related to methods for reducing induction noise caused by sensor movement in a towed marine electromagnetic survey system.

### Background Art

U.S. Patent Application Publication No. 2010/0017133, a patent application owned by an affiliated company of the owner of the present invention, describes structures and methods for detecting voltages induced in a towed marine geophysical sensor. Generally, the disclosed method includes measuring a parameter related to an amount of current passed through an electromagnetic transmitter to induce an electromagnetic field in subsurface formations. A magnetic field proximate the electromagnetic receiver is measured. A transmitter portion of the measured magnetic field is estimated from the measured parameter. A motion portion of the measured magnetic field is estimated from the measured magnetic field and the estimated transmitter portion. A voltage induced in the receiver is estimated from the estimated motion portion. Signals detected by the receiver are corrected using the estimated voltage. US20090295394 also discloses an electromagnetic sensor cable.

Generally, the disclosed method is based on the assumption that the total magnetic field, represented by H(t), of the Earth, as experienced in the water at each of the receivers is essentially uniform in space, that is, the Earth's magnetic field does not vary significantly over the length of the receiver cable, although it does vary with time due to magnetotelluric effects. The receiver cable is composed of electrical conductors moving within the Earth's magnetic field H(t) with a determinable velocity v(t). Assuming that the spatial distribution of the receiver cable changes slowly with respect to time, v(t) will be a slowly varying function. The Earth magnetic field induced voltage noise at each receiver is proportional to the rate of change of magnetic flux, which is proportional to the product of the Earth's magnetic field H(t) and the component of the receiver cable velocity vector that is perpendicular to the Earth's magnetic field. The '133 publication discloses a number of structures for magnetic field sensors in the receiver cable. All the disclosed structures are inside the structure of the receiver cable, which makes them susceptible to movement as the cable bends and twists during survey operations. There is a need for improved structures for magnetic field sensors in such receiver cables that are less susceptible to effects of cable deformation during survey operations.

### Summary of the Invention

According to the present invention, we provide a marine electromagnetic sensor cable according to claim 1.

Other aspects and advantages of the invention will be apparent from the following description and the appended claims.

### Brief Description of the Drawings

FIG. 1 is an example electromagnetic survey system.
FIG. 2 shows the receiver cable of the system in FIG. 1 in more detail.
FIG. 3 shows magnetic field sensors disposed at selected locations along the receiver cable in FIG. 2.
FIG 4 shows magnetic field sensors in more detail.
FIG. 5 shows an example of lateral deflections in the wire of coils forming the magnetic field sensors in FIG. 4.
FIG. 6 shows an alternative coil arrangement for the sensors of FIG. 4.

### Detailed Description

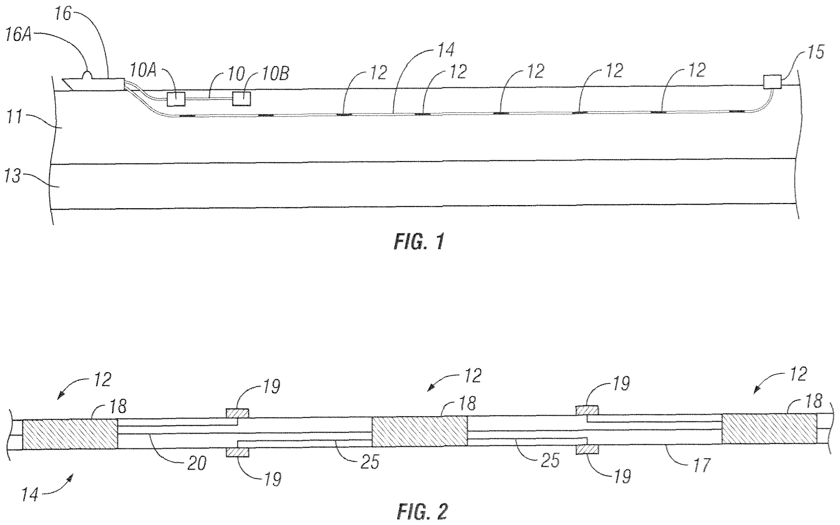

FIG. 1 shows an example of a marine electromagnetic survey system that is made according to the invention. In the system shown in FIG. 1, an electromagnetic transmitter cable 10 and a plurality of receivers 12 disposed within a receiver cable 14 are towed behind a survey vessel 16 along a body of water 11 such as a lake or the ocean. The transmitter 10 may be, for example, an electrode bi-pole, including two spaced apart electrodes 10A, 10B along an insulated, reinforced electrical cable. The transmitter could also be a magnetic field source such as one or more wire loops (not shown). Equipment disposed on the vessel 16, shown generally at 16A and referred to for convenience as a "recording system" may include circuits (not shown separately) arranged to pass electric current through the transmitter 10, e.g., the electrodes 10A, 10B, at selected times. The current may have any transient-type waveform, including, for example, switching direct current on, switching direct current off, changing direct current polarity, or switching current in a pseudo-random binary sequence. The transmitter current may also be continuous wave having one or more discrete frequencies. Other circuits (not shown) in the recording system 16A may detect voltages induced in the various receivers 12 on the receiver cable 14 and can make a recording with respect to time of the voltages induced in each receiver 12. Typically such recordings will be indexed with respect to particular events in the transmitter current waveform. Electromagnetic fields produced by passing the current through the transmitter 10 travel through the water 11, and through formations 13 below the water bottom. Electromagnetic fields induced in response are detected by the receivers 12 on the receiver cable 14. The various signals detected by the receivers 12 may be interpreted to infer the spatial distribution of electrical conductivity in the formations 13.

A portion of the receiver cable 14 may be observed in more detail in FIG. 2. The receiver cable 14 has a flexible outer jacket 17, made from material such as polyurethane. The jacket 17 may be filled with non-conducting liquid such as oil or kerosene, or, preferably, with a gel-like material such as is known in the art to be used to fill certain types of marine seismic streamers. Each receiver 12 includes a signal processing module 18 and may be configured to measure a voltage imparted across spaced apart pairs of electrodes 19 coupled to the module 18 as shown. Alternatively, the receivers 12 are configured to measure voltage induced in one or more wire loops or magnetometers (not shown) for measuring magnetic field and/or the time derivative of the magnetic field. The electrodes 19 (or magnetic field sensing devices) may be coupled to the respective signal processing modules using electrode cables 25. A power and communications cable 20 may provide electrical power such as from the recording system (16A in FIG. 1) for powering the various circuits in the signal processing modules 18 and providing a communications path to transfer signals representing the receiver measurements to a remote location, such as the recording system (16A in FIG. 1). It is contemplated that the signal processing modules 18 will include suitable preamplification and signal conditioning devices (not shown) and may include devices (not shown) for converting analog voltage measurements into digital signals for communication along the communications cable 20, however, the foregoing are not intended to limit the scope of the invention. The signal processing modules 18 and associated electrodes 19 may be arranged as shown in FIG. 2 so that the electrodes 19 from adjacent modules 18 are in the same axial position along the receiver cable 14, however, such arrangement is not a limit on the scope of this invention. Other items typically associated with such as receiver cable not shown for clarity of the illustration include strength members such as made from fiber rope, to transfer axial strain along the cable 14.

The example transmitter and receivers shown in FIGS. 1 and 2 are horizontal electric bi-poles. As explained above, magnetic field sensing devices and transmitters are used in electromagnetic surveying according to the invention. It should also be understood that vertical bi-poles may be used in accordance with the invention.

As explained in the Ziolkowski et al. patent application publication referred to in the Background section herein, in order to reduce the effects of the induced voltage noise from the Earth's magnetic field in a moving electromagnetic receiver 12, three principal time-varying quantities can be measured: a parameter related to the current *I*(*t*) applied to the transmitter (10 in FIG. 1), the voltage *V*(*t*) measured at the receiver 12, and three orthogonal components of the induced magnetic field *HIₓ*(*t*), *HI_{y}*(*t*), and *HI_{z}*(*t*) at one or more positions along the receiver cable (14 in FIG. 1). The transmitter current *I*(*t*) should be measured as closely to the transmitter (10 in FIG. 1) as possible. Such measurement can be performed using any suitable device, for example a magnetometer, which can measure the magnetic field induced by the transmitter.

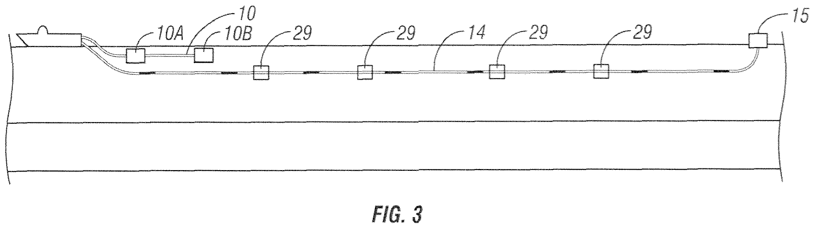

FIG. 3 shows a type of a receiver cable 14 in the system of FIG. 1 in which magnetic field sensors 29 are disposed along the receiver cable 14 at selected positions to measure the three induced magnetic field components. The present invention is related to improved structures for such magnetic field sensors compared to those disclosed in the Ziolkowski et al. publication.

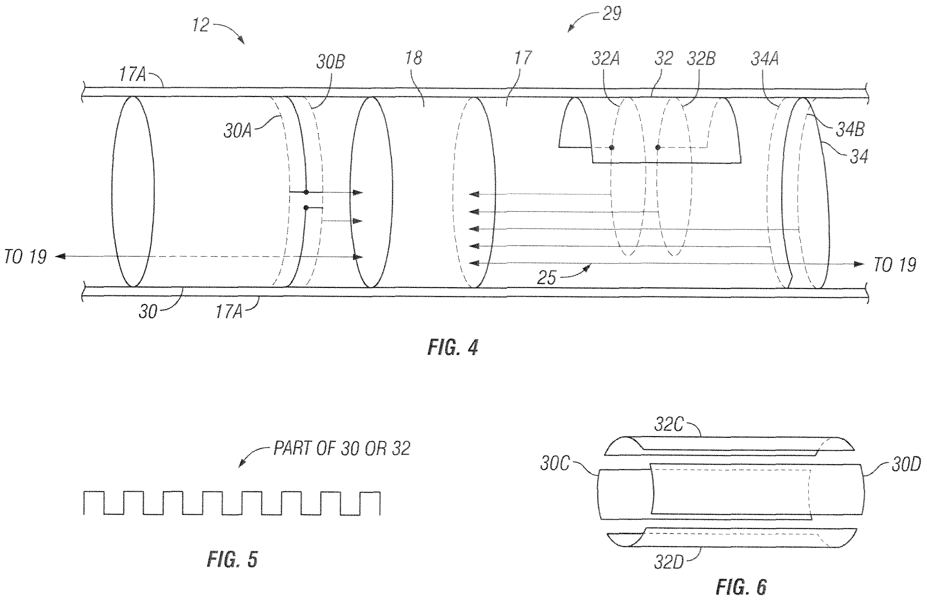

FIG. 4 shows an example structure of a magnetic field sensor 29 according to the invention. A first wire loop or coil 30 is disposed on the exterior surface of the jacket 17, generally in the area of one of the signal processing modules 18. The first wire loop 30 may be a so called "saddle coil" which has a magnetic dipole moment perpendicular to the cross sectional area of the first loop 30. The first loop 30 may cover up to 180 degrees of the circumference of the jacket 17 in the manner shown in FIG. 4 so that the dipole moment of the first loop 30 is transverse to the longitudinal axis of the cable 14. A second saddle coil 32 is also be positioned on the exterior of the jacket 17, and is oriented so that its magnetic dipole moment is orthogonal to that of the first loop 30. A third coil 34 may be disposed on the exterior of the jacket and wound in a plane perpendicular to the longitudinal axis of the receiver cable 14, thus having a dipole moment along the cable 14. Each of the loops 30, 32 and coil 34 are electrically connected to the signal processing module 18 using conductor rings 30A, 30B, 32A, 32B, 34A, 34B, respectively, disposed inside the jacket 17. The conductor rings may be, for example, stainless steel bands to maintain the shape of the cable 14. The loops 30, 32 and coil 34 may be protected by affixing a second jacket 17A over the exterior of the loops 30, 32 and coil 34 and the jacket 17. The second jacket 17A may also be made from polyurethane or similar material.

FIG. 5 shows an example of how any of all of the loops or coils (e.g., 30 in FIG. 4) may be configured to enable measurement of strain along the exterior surface of the receiver cable 14. The wire forming the loop 30 may be shaped to have small scale lateral displacements from the general path of the wire, such as square or rectangular shapes as shown in FIG. 5. It is contemplated that a suitable size for the lateral displacements is on the order of 1 millimeter. However, the size may be any size that enable detection of strain (explained below) and will resist breakage of the wire under the maximum expected strain on the receiver cable 14. Such a wire configuration will change electrical resistance as the receiver cable bends, twists or elongates. Such change in resistance may be measured in the signal processing module (18 in FIG. 4) for example, and the measurements thereof converted (e.g., in the recording system 16A) to amounts of axial, torsional and/or bending strain in the receiver cable 14.

The wire loops or coils described above may be molded into the jacket 17 during extrusion or other manufacturing process. Alternatively, the wire loops or coils may be deposited on the surface of the jacket by spraying powdered, electrically conductive material such as powdered metal dispersed in a suitable binder onto the exterior of the jacket 17. In such configuration, electrical contact may be made between the coil and the conductor rings by piercing the jacket 17 where the end of the loop or coil is disposed at the location of the conductor ring with a suitable length metal pin.

If it is desirable to conserve length along the exterior of the cable 14 when applying the magnetic field sensors, the saddle coils (30, 32 in FIG. 4) may be each configured into two saddle coils disposed on opposite sides of the jacket (17 in FIG. 4) electrically connected in inverted series, wherein each saddle coil covers at most about one-fourth the circumference of the exterior of the cable (14 in FIG. 1). Referring to FIG. 6, a first pair of opposed saddle coils 30C, 30D performs the same magnetic field detection as does the first saddle coil (30 in FIG. 4), wherein the magnetic dipole is substantially transverse to the longitudinal axis of the cable (14 in FIG. 1). A second pair of opposed saddle coils 32C, 32D performs the same magnetic field detection function as does the second saddle coil (32 in FIG. 4), wherein the magnetic dipole of the second coil pair 32C, 32D is substantially orthogonal to that of the first saddle coil pair, and is substantially transverse to the longitudinal axis of the cable (14 in FIG. 1).

A receiver cable made according to the various aspects of the invention may have improved detection of induced voltages caused by moving the cable through the earth's magnetic field. Such cables in some embodiments may also be able to detect bending, twisting and axial strain in the cable.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A marine cable (14) comprising magnetic field sensors and a first jacket (17) covering an exterior of the cable (14);
**characterised in that** each magnetic field sensor comprises:
a first wire loop (30) disposed on the exterior of the first jacket (17), the wire loop (30) shaped to have a magnetic dipole moment along a selected direction; and
a second wire loop (32) disposed on the exterior of the first jacket (17), the second wire loop (32) shaped to have a magnetic dipole moment orthogonal to the selected direction;
a conductor ring (30A) disposed inside the first jacket (17) to make electrical connection between the first wire loop (30) and an associated signal processing circuit (18) disposed inside the first jacket (17); and
a second conductor ring (32A) disposed inside the first jacket (17) to make electrical connection between the second wire loop (32) and the associated signal processing circuit (18),
wherein each magnetic field sensor is responsive to electromagnetic fields emanating from subsurface rock formations in response to an electromagnetic field imparted thereto by a transmitter.

2. The cable of claim 1, wherein the first wire loop (30) is saddle shaped and covers at most half a circumference of the first jacket (17).

3. The cable of claim 2, wherein the first wire loop (30) includes two saddle shaped coils (30C, 30D) disposed on opposed sides of the first jacket (17).

4. The cable of claim 3, wherein the second wire loop (32) further comprises two saddle coils (32C, 32D) disposed on opposed sides of the first jacket (17), the two saddle coils (32C, 32D) longitudinally aligned with the two saddle shaped coils (30C, 30D) and disposed orthogonally to the two saddle shaped coils.

5. The cable of any of the preceding claims, further comprising a second jacket (17A) disposed externally to the first jacket (17) and the first wire loop (30).

6. The cable of any of the preceding claims, further comprising at least one third wire loop (34) disposed on the exterior of the first jacket (17) such that each wire loop has a magnetic dipole moment mutually orthogonal to the two other wire loops.

7. The cable of any of the preceding claims, wherein the wire in the first wire loop (30) includes lateral displacements from the path of the wire, the lateral displacements having size and shape selected to cause change in resistance of the wire as a result of strain along the path of the wire; the lateral displacements having size selected to resist tearing of the wire under a maximum expected strain on the cable.

8. The cable of any of the preceding claims, further comprising a pair of spaced apart electrodes (19) disposed externally to the second jacket (17A).

9. The cable of claim 8, wherein the electrodes (19) are coupled to the signal processing device (18) disposed inside the first jacket (17).

10. The cable of any of the preceding claims, wherein the first wire loop (30) is molded into the first jacket (17) during manufacture thereof.

11. The cable of any of the preceding claims, wherein the first wire loop (30) is deposited on the first jacket (17) in the form of electrically conductive particles suspended in a binder.

12. The cable of claim 1, wherein the first jacket (17) is filled with non-conducting liquid selected from the group consisting of: an oil, a kerosene, a gel-like material.

## Patentansprüche

1. Seekabel (14) mit Magnetfeldsensoren und einem ersten Mantel (17), der eine Außenseite des Kabels (14) bedeckt;
**dadurch gekennzeichnet, dass** jeder Magnetfeldsensor Folgendes umfasst:
eine erste Drahtschleife (30), die an der Außenseite des ersten Mantels (17) angeordnet ist, wobei die Drahtschleife (30) derart ausgebildet ist, dass sie ein magnetisches Dipolmoment entlang einer ausgewählten Richtung aufweist; und
eine zweite Drahtschleife (32), die an der Außenseite des ersten Mantels (17) angeordnet ist, wobei die zweite Drahtschleife (32) derart ausgebildet ist, dass sie ein magnetisches Dipolmoment senkrecht zur ausgewählten Richtung aufweist;
einen Leiterring (30A), der innerhalb des ersten Mantels (17) angeordnet ist, um eine elektrische Verbindung zwischen der ersten Drahtschleife (30) und einer zugeordneten Signalverarbeitungsschaltung (18) herzustellen, die innerhalb des ersten Mantels (17) angeordnet ist; und
einen zweiten Leiterring (32A), der innerhalb des ersten Mantels (17) angeordnet ist, um eine elektrische Verbindung zwischen der zweiten Drahtschleife (32) und der zugeordneten Signalverarbeitungsschaltung (18) herzustellen,
wobei jeder Magnetfeldsensor auf elektromagnetische Felder anspricht, die von unterirdischen Gesteinsformationen als Reaktion auf ein elektromagnetisches Feld ausgehen, das von einem Sender darauf ausgeübt wird.

2. Kabel nach Anspruch 1, wobei die erste Drahtschleife (30) sattelförmig ist und höchstens einen halben Umfang des ersten Mantels (17) bedeckt.

3. Kabel nach Anspruch 2, wobei die erste Drahtschleife (30) zwei sattelförmige Spulen (30C, 30D) aufweist, die auf gegenüberliegenden Seiten des ersten Mantels (17) angeordnet sind.

4. Kabel nach Anspruch 3, wobei die zweite Drahtschleife (32) ferner zwei Sattelspulen (32C, 32D) umfasst, die auf gegenüberliegenden Seiten des ersten Mantels (17) angeordnet sind, wobei die beiden Sattelspulen (32C, 32D) in Längsrichtung mit den beiden sattelförmigen Spulen (30C, 30D) ausgerichtet und orthogonal zu den beiden sattelförmigen Spulen angeordnet sind.

5. Kabel nach einem der vorhergehenden Ansprüche, ferner umfassend einen zweiten Mantel (17A), welcher extern vom ersten Mantel (17) und von der ersten Drahtschleife (30) angeordnet ist.

6. Kabel nach einem der vorhergehenden Ansprüche, ferner umfassend mindestens eine dritte Drahtschleife (34), die auf der Außenseite des ersten Mantels (17) angeordnet ist, sodass jede Drahtschleife ein magnetisches Dipolmoment aufweist, das zu den beiden anderen Drahtschleifen orthogonal ist.

7. Kabel nach einem der vorhergehenden Ansprüche, wobei der Draht in der ersten Drahtschleife (30) seitliche Verschiebungen von dem Drahtweg aufweist, wobei die seitlichen Verschiebungen eine Größe und Form aufweisen, die ausgewählt sind, um eine Änderung im Drahtwiderstand infolge einer Dehnung entlang des Drahtwegs zu bewirken; wobei die seitlichen Verschiebungen eine Größe aufweisen, die ausgewählt ist, um eine Dehnung des Kabels zu widerstehen.

8. Kabel nach einem der vorhergehenden Ansprüche, ferner umfassend ein Paar beabstandeter Elektroden (19), die außerhalb des zweiten Mantels (17A) angeordnet sind.

9. Kabel nach Anspruch 8, wobei die Elektroden (19) mit der Signalverarbeitungsvorrichtung (18) gekoppelt sind, die innerhalb des ersten Mantels (17) angeordnet ist.

10. Kabel nach einem der vorhergehenden Ansprüche, wobei die erste Drahtschleife (30) während ihrer Herstellung in den ersten Mantel (17) eingeformt wurde.

11. Kabel nach einem der vorhergehenden Ansprüche, wobei die erste Drahtschleife (30) auf dem ersten Mantel (17) in Form von elektrisch leitenden Teilchen, die in einem Bindemittel suspendiert sind, gelagert ist.

12. Kabel nach Anspruch 1, wobei der erste Mantel (17) mit nichtleitender Flüssigkeit gefüllt ist, ausgewählt aus der Gruppe bestehend aus: ein Öl, ein Kerosin, ein gelartiges Material.

## Revendications

1. Câble marin (14) comprenant des capteurs de champ magnétique et
une première enveloppe (17) recouvrant un extérieur du câble (14) ;
**caractérisé en ce que** chaque capteur de champ magnétique comprend :
une première boucle de fil (30) disposée sur l'extérieur de la première enveloppe (17), la boucle de fil (30) étant formée pour avoir un moment magnétique dipolaire le long d'une direction sélectionnée ; et
une deuxième boucle de fil (32) disposée sur l'extérieur de la première enveloppe (17), la deuxième boucle de fil (32) étant formée pour avoir un moment magnétique dipolaire orthogonal à la direction sélectionnée ;
une bague conductrice (30A) disposée à l'intérieur de la première enveloppe (17) pour établir une connexion électrique entre la première boucle de fil (30) et un circuit de traitement de signal associé (18) disposé à l'intérieur de la première enveloppe (17) ; et
une seconde bague conductrice (32A) disposée à l'intérieur de la première enveloppe (17) pour établir une connexion électrique entre la deuxième boucle de fil (32) et le circuit de traitement de signal associé (18),
chaque capteur de champ magnétique étant sensible aux champs électromagnétiques émanant des formations rocheuses souterraines en réponse à un champ électromagnétique qui leur est communiqué par un émetteur.

2. Câble selon la revendication 1, dans lequel la première boucle de fil (30) est en forme de selle et recouvre au plus la moitié d'une circonférence de la première enveloppe (17).

3. Câble selon la revendication 2, dans lequel la première boucle de fil (30) comporte deux bobines en forme de selle (30C, 30D) disposées sur les côtés opposés de la première enveloppe (17).

4. Câble selon la revendication 3, dans lequel la deuxième boucle de fil (32) comprend en outre deux bobines en sellette (32C, 32D) disposées sur les côtés opposés de la première enveloppe (17), les deux bobines en sellette (32C, 32D) étant alignées longitudinalement avec les deux bobines en forme de selle (30C, 30D) et disposées orthogonalement aux deux bobines en forme de selle.

5. Câble selon l'une quelconque des revendications précédentes, comprenant en outre une seconde enveloppe (17A) disposée de manière externe par rapport à la première enveloppe (17) et à la première boucle de fil (30).

6. Câble selon l'une quelconque des revendications précédentes, comprenant en outre au moins une troisième boucle de fil (34) disposée sur l'extérieur de la première enveloppe (17) de telle sorte que chaque boucle de fil a un moment magnétique dipolaire mutuellement orthogonal aux deux autres boucles de fil.

7. Câble selon l'une quelconque des revendications précédentes, dans lequel le fil dans la première boucle de fil (30) comporte des déplacements latéraux par rapport au trajet du fil, les déplacements latéraux ayant une taille et une forme sélectionnées pour provoquer un changement de résistance du fil comme résultat de contrainte le long du trajet du fil ; les déplacements latéraux ayant une taille sélectionnée pour résister à la déchirure du fil sous une contrainte maximale attendue sur le câble.

8. Câble selon l'une quelconque des revendications précédentes, comprenant en outre une paire d'électrodes espacées (19) disposées de manière externe par rapport à la seconde enveloppe (17A).

9. Câble selon la revendication 8, dans lequel les électrodes (19) sont couplées au dispositif de traitement du signal (18) disposé à l'intérieur de la première enveloppe (17).

10. Câble selon l'une quelconque des revendications précédentes, dans lequel la première boucle de fil (30) est moulée dans la première enveloppe (17) lors de sa fabrication.

11. Câble selon l'une quelconque des revendications précédentes, dans lequel la première boucle de fil (30) est déposée sur la première enveloppe (17) sous forme de particules électriquement conductrices en suspension dans un liant.

12. Câble selon la revendication 1, dans lequel la première enveloppe (17) est remplie de liquide non conducteur sélectionné dans le groupe constitué par : une huile, un kérosène, un matériau de type gel.
